# EUROPÄISCHE PATENTSCHRIFT

(11) **EP 1 552 148 B1**
(45) Veröffentlichungstag und Bekanntmachung des Hinweises auf die Patenterteilung: **11.04.2007**
(21) Anmeldenummer: 03798890.4
(22) Anmeldetag: 04.09.2003
(51) Int. Cl.: F04B 43/04, F04B 53/10

(54) **MIKROPUMPE UND VERFAHREN ZU IHRER HERSTELLUNG**
MICROPUMP AND METHOD FOR THE PRODUCTION THEREOF
MICROPOMPE ET PROCEDE DE FABRICATION ASSOCIE

(30) Priorität: 11.09.2002 DE 10242110
(43) Veröffentlichungstag der Anmeldung: 13.07.2005
(73) Patentinhaber: ThinXXS Microtechnology AG, 66482 Zweibrücken (DE)
(72) Erfinder: WEBER, Lutz, 66482 Zweibrücken (DE)
(74) Vertreter: Bernhardt, Reinold
(86) Internationale Anmeldenummer: PCT/EP2003/009799
(87) Internationale Veröffentlichungsnummer: WO 2004/031580

(56) Entgegenhaltungen:
- EP-A- 0 324 519
- EP-A- 0 424 087
- EP-A- 0 934 757
- US-A- 5 025 829
- US-B1- 6 334 761

## Beschreibung

Die Erfindung betrifft eine Mikropumpe mit einer Pumpmembran, die unter Änderung des Volumens einer an die Pumpmembran und ein Basisteil grenzenden Pumpkammer bewegbar ist, und mit zwei in Ausnehmungen im Basisteil angeordneten, auf den Druck in der Pumpkammer ansprechenden Ventilen zum wechselseitigen Öffnen und Sperren eines Einlass- und Auslasskanals für das zu fördernde Medium, wobei die Ventile ohne gemeinsame Bauteile durch als solche funktionsfähige, einen Ventilsitz und Ventilkörper aufweisende Ventilbaugruppen gebildet sind und wobei die Ventilbaugruppen ein den Ventilsitz bildendes Sitzbauteil mit einer durch eine Randerhöhung einer Bodenplatte gebildeten Vertiefung für die Aufnahme eines den Ventilkörper bildenden Federbauteils aufweisen.

Die lateralen Abmessungen solcher, ganz oder überwiegend aus Kunststoffen hergestellter Mikropumpen liegen vorzugsweise zwischen 5 und 30 mm bei einer Höhe von 0,5 bis 5 mm. Die Förderraten bewegen sich für Flüssigkeiten etwa zwischen 10⁻⁶ und 0,05l/min, für Gase zwischen 10⁻⁵ und 0,2l/min. Hauptsächliche Einsatzgebiete sind die chemische und biochemische Analytik, die Mikroreaktionstechnik, der Transport von Gasen, der Transport und die Dosierung von pharmazeutischen Wirkstoffen, Probenflüssigkeiten, Klebstoffen, Brennstoffen oder Schmiermitteln.

Mikropumpen aus Kunststoff haben gegenüber solchen aus Silizium oder Metallen den Vorteil, dass neben der Verwendung preiswerter Ausgangsmaterialien effiziente Herstellungsvefahren, wie das Spritzgießen, angewendet werden können. Je nach Anforderungen, beispielsweise in bezug auf optische Transparenz, Festigkeit, Hydrophilität, Hydrophobität oder chemische Resistenz, sind bei gleicher Konstruktion unterschiedliche Kunststoffe einsetzbar, wie beispielsweise Polycarbonat, Polypropylen, Polyethylen, Zykloolephincopolymer, Polyetheretherketon, Polyphenylensulfid oder Fluorkunststoffe.

Die DE 44 02 119 beschreibt eine Mikropumpe aus Kunststoff mit einer zwischen zwei Gehäuseteilen angeordneten Membran, die sowohl als Pumpmembran als auch zur Bildung von beweglichen Ventilkörpern dient und an Ventilsitzen durchbrochen ist.

Eine weitere Mikropumpe geht aus der DE 197 20 482 hervor. An der Oberseite eines zweiteiligen, im Inneren Ausnehmungen für Ventile aufweisenden Basisteils ist unter Bildung einer Pumpkammer eine Pumpmembran angebracht, die durch einen Piezoaktor verformbar ist. Eine zwischen den beiden Teilen des Basisteils angeordnete Ventilmembran weist an den beiden Ventilsitzen einen Durchbruch auf und bildet so ein beiden Ventilen gemeinsames Bauteil.

Die Herstellung solcher Mikropumpen unter Verwendung verhältnismäßig großer, an der Bildung beider Ventile beteiligter Ventilmembranen ist sehr aufwendig. Insbesondere bereitet es Schwierigkeiten, die Durchbrüche in der Membran mit der für die Funktion der Ventile erforderlichen Genauigkeit an den Ventilsitzen anzuordnen. Zum einen führen für Kunststoffmaterialien typische Verzugs- und Schwindungseffekte zu großen Positionsschwankungen der Durchbrüche auf der Membran. Zum anderen kann es bei der Montage der dünnen, schwer zu handhabenden Membranfolie leicht zu Fehlanordnungen der Durchbrüche an den Ventilsitzen kommen. Unter den Bedingungen einer Serienfertigung ist die Produktionsausbeute daher gering.

Eine Mikropumpe der eingangs erwähnten Art geht aus der EP 0 424 087 A1 hervor. Das Sitzbauteil der beiden aus Kunststoff hergestellten Ventilbaugruppen dieser Mikropumpe weist einen von der Bodenplatte vorstehenden Haltezapfen auf, welcher in eine Öffnung im Federbauteil eingreift. Eine die Vertiefung abdeckende, mit einer Durchgangsöffnung versehene Platte hält das auf dem Zapfen sitzende Federbauteil axial auf dem Zapfen fest.

Der vorliegenden Erfindung liegt die Aufgabe zugrunde, eine neue Mikropumpe der eingangs erwähnten Art zu schaffen, die sich gegenüber bekannten derartigen Mikropumpen mit geringerem Aufwand herstellen lässt.

Die diese Aufgabe lösende Mikropumpe nach der Erfindung ist dadurch gekennzeichnet, dass die Ventilbaugruppen lediglich durch das Sitz- und Federbauteil gebildet sind, und dass das Federbauteil durch die Randerhöhung zentriert und in einem ringförmigen Randbereich mit der Bodenplatte des Sitzbauteils verschweißt ist.

Die Fertigung der nur zweiteiligen Ventilbaugruppen unter Zentrierung des Federbauteils durch die Randerhöhung erfordert einen geringeren Aufwand als die Herstellung derartige Ventilbaugruppen nach dem Stand der Technik.

Vorteilhaft können beide Ventilbaugruppen, d.h. die Einlassventilbaugruppe und die Auslassventilbaugruppe, baugleich sein, wobei der Ventilsitz jeweils in die Richtung des Förderstroms weist. Auch diese; den Anteil gleicher Bauteile erhöhende Maßnahme trägt zur Verringerung des Herstellungsaufwands der Mikropumpe bei.

In der bevorzugten Ausführungsform der Erfindung sind die Ausnehmungen als zur Pumpkammer offene Einsenkungen gebildet, in welche sich die Ventilbaugruppen bei der Endmontage der Pumpe mit geringem Aufwand positionsgenau einsetzen lassen.

Zweckmäßig ist die Höhe der Ventilbaugruppe gleich der Tiefe der Einsenkung. So wird die Bildung von Totvolumen weitgehend vermieden.

In der bevorzugten Ausführungsform der Erfindung ist das Sitzbauteil rotationssymmetrisch und der Ventilkörper ist zum Schließen bzw. Freigeben einer Ventilöffnung im Sitzbauteil ausgebildet, die vorzugsweise koaxial zur Rotationssymmetrieachse angeordnet ist.

Das Federbauteil kann ein sich von dem Randbereich nach innen erstreckendes Lippenelement zum Schließen bzw. Freigeben der Ventilöffnung aufweisen. Je nach Leistungsanforderungen an die Mikropumpe können unterschiedlich gestaltete Federbauteile mit dem gleichen Sitzbauteil kombinierbar sein. Pumpen mit unterschiedlichen Eigenschaften unterscheiden sich dann nur in bezug auf die Federbauteile.

In weiterer vorteilhafter Ausgestaltung der Erfindung ist die Mikropumpe ferner aus einer vorgefertigten Basisbaugruppe, die aus dem Basisteil und Schlauchanschlüssen besteht, und einer vorgefertigten Aktorbaugruppe, welche die Membran und ggf. eine mit der Membran verbundene Piezoscheibe umfasst, zusammengesetzt.

Ein solcher modularer Aufbau trägt weiter zur Verringerung des Herstellungsaufwands bei. Separate Produktentwicklung, Produktion und Qualitätssicherung für die Komponenten der Pumpe erhöhen die Produktionssicherheit sowie die Flexibilität und den Umrüstungsaufwand bei der Serienfertigung verschiedener Pumpenvarianten. Die für sich funktionsfähigen Baugruppen erlauben untereinander große, die Montage erleichternde Positionierungstoleranzen.

Zweckmäßig sind die Basisbaugruppe, von den Ausnehmungen im Basisteil abgesehen, und die Aktorbaugruppe rotationssymmetrisch ausgebildet, wobei die Pumpmembran mit dem Basisteil ggf. über einen Trägerring verbunden ist, welcher auf einem Ringsitz, insbesondere einer Ringschulter, am Basisteil aufsitzt. Die rotationssymmetrischen Teile bzw. die zu ihrer Herstellung erforderlichen Werkzeuge lassen sich mit verhältnismäßig geringem Aufwand herstellen. Durch den auf dem Ringsitz aufsitzenden Trägerring ist die Aktorbaugruppe bei der Montage mit geringem Aufwand auf der Basisbaugruppe ohne Positionskontrolle zentrierbar.

Bei dem Basisteil handelt es sich vorzugsweise um ein Scheibenteil, wobei sich die Kanäle für den Zu- und Abfluss des Fördermediums zweckmäßig senkrecht zur Scheibenebene auf kürzestem Weg durch das Basisteil hindurch erstrecken. Dies ist vorteilhaft, um den Strömungswiderstand innerhalb der Mikropumpe zu minimieren.

Die Basisbaugruppe kann einstückig mit den Schlauchanschlüssen z.B. als Spritzgussteil hergestellt sein.

Wenigstens die mit dem Medium in Berührung kommenden Teile der Pumpe bestehen aus einem Kunststoff, der gegen das Fördermedium beständig ist und ggf. nicht aus Kunststoff bestehende Teile gegen aggressive Medien schützt. Zum Beispiel lässt sich die Membran, um gewünschte Verformungseigenschaften zu erreichen, aus mehreren Lagen bilden, wobei z.B. eine durch eine Kunststofflage abgeschirmte Lage aus einem Metall bestehen kann.

Die Erfindung soll nun anhand von Ausführungsbeispielen und der beiliegenden, sich auf diese Ausführungsbeispiele beziehenden Zeichnungen näher erläutert werden. Es zeigen:
- Fig. 1: eine Schnittansicht einer Mikromembranpumpe nach der Erfindung,
- Fig. 2: die Mikrömembranpumpe von Fig. 1 in einer Draufsicht,
- Fig. 3: weitere Ausführungsbeispiele für Aktorbaugruppen, die in einer Mikromembranpumpe nach der Erfindung verwendbar sind,
- Fig. 4: ein weiteres Ausführungsbeispiel für eine in einer Mikromembranpumpe nach der Erfindung verwendbare Basisbaugruppe,
- Fig. 5: eine in der Mikromembranpumpe von Fig. 1 und 2 verwendete Ventilbaugruppe in einer geschnittenen Seitenansicht,
- Fig. 6 und 7: weitere Ausführungsbeispiele für Ventilbaugruppen, die in einer Mikromembranpumpe nach der Erfindung verwendbar sind,
- Fig. 8: weitere Ausführungsbeispiele für Ventilfederbauteile, die in einer Mikromembranpumpe nach der vorliegenden Erfindung verwendbar sind.

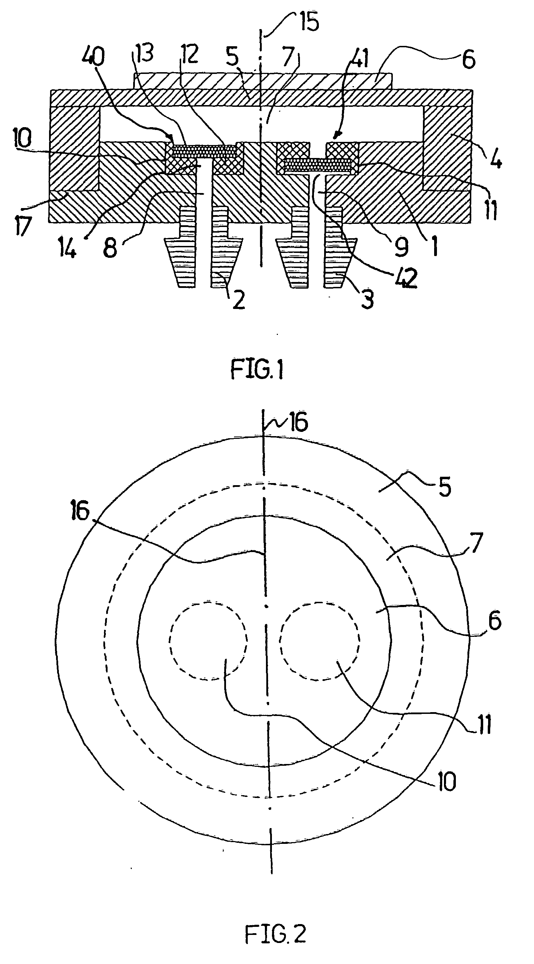

In Fig. 1 weist das Bezugszeichen 1 auf ein scheibenförmiges Basisteil mit einer Ringschulter 17 am Umfang hin. An dem Basisteil 1 sind ein Einlassanschluss 2 und ein Auslassanschluss 3 angebracht. Auf dem Basisteil 1 sitzt über einen Ringträger 4 eine mit dem Ringträger 4 an ihrem Außenrand durch Kleben oder Schweißen verbundene Membran 5 auf, die ihrerseits mit einer Piezoscheibe 6 verklebt ist. Der Ringträger 4 könnte auch einstückig mit der Membran 5 verbunden sein.

Zwischen der Membran 5 und dem mit der Membran durch Kleben oder Schweißen verbundenen Basisteil 1 ist eine Pumpkammer 7 gebildet.

An den Einlassanschluss 2 schließt sich ein Einlasskanal 8 und an den Auslassanschluss 3 ein Auslasskanal 9 an, wobei die beiden Kanäle jeweils in eine rundzylindrische Ausnehmung 10 bzw. 11 in dem Basisteil 1 einmünden. Die Kanäle 8 und 9 sind konzentrisch zu den jeweiligen Ausnehmungen 10 und 11 angeordnet. In den Ausnehmungen 10 und 11, die als zur Pumpkammer 7 offene Einsenkungen ausgebildet sind, sitzen baugleiche Ventilbaugruppen 40 und 41 mit einem Sitzbauteil 12 und einem Federbauteil 13, wobei das Federbauteil der Einlassventilbaugruppe 40 in der Ausnehmung 10 der Pumpkammer 7 zugewandt und das Federbauteil der Auslassventilbaugruppe 41 in der Ausnehmung 11 der Pumpkammer 7 abgewandt ist. Das Sitzbauteil 12 weist eine zu dem Einlasskanal 8 ausgerichtete Öffnung 14 auf.

Abgesehen von den Anschlüssen, Kanälen und Ventilbaugruppen ist die in Fig. 1 und 2 gezeigte Mikropumpe rotationssymmetrisch zu einer Achse 15 ausgebildet. Wie Fig. 2 erkennen lässt, sind die Anschlüsse; Kanäle und Ventilbaugruppen symmetrisch zu einer die Rotationssymmetrieachse 15 enthaltenden, die Pumpe in Hälften teilenden Ebene 16 angeordnet.

Bei der Herstellung der in den Fig. 1 und 2 gezeigten Mikromembranpumpe werden vor deren Endmontage drei verschiedene Baugruppen unabhängig voneinander vorgefertigt, nämlich durch die Piezoscheibe 6, die Membran 5 und den Trägerring 4 gebildete Aktorbaugruppen, aus dem einstückigen Basisteil 1 und den Anschlüssen 2 und 3 bestehende Basisbaugruppen und aus dem Sitzbauteil 12 und dem Federbauteil 13 bestehende Ventilbaugruppen.

Die einzelnen Teile der genannten Baugruppen sind, wie auch die Baugruppen untereinander, vorzugsweise miteinander verschweißt, wobei neben Schweißauch Klebverbindungen in Betracht kommen.

In dem betreffenden Ausführungsbeispiel bestehen mit Ausnahme der keramischen Piezoscheibe 6 alle Teile der Pumpe aus Kunststoff.

Die aus den Baugruppen zusammengesetzte Pumpe lässt sich leicht fertigen. Der Ringabsatz 17 sorgt für eine Zentrierung der Aktorbaugruppe. Indem die Ventilbaugruppen als für sich funktionsfähige Teile vorgefertigt sind, hängt die Funktion der Ventile nicht von der Genauigkeit ihrer Anordnung ab.

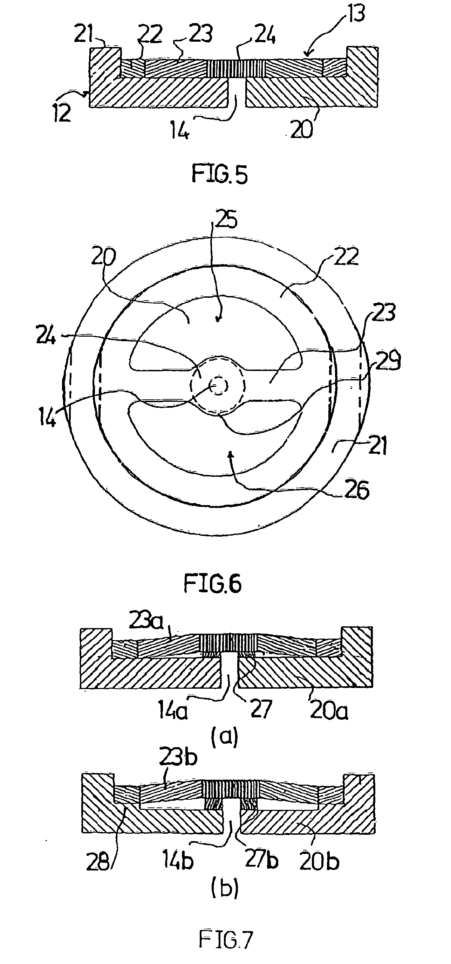

Zum Ansaugen eines zu fördernden Fluids lenkt die Piezoscheibe 6 die Membran 5 aus, wodurch sich das Volumen der Pumpkammer 7 vergrößert. Zu Beginn der Ansaugphase ist in dem betreffenden Ausführungsbeispiel die Membran 5 eingebeult. Durch entstehenden Unterdruck hebt das Federbauteil 13 der Einlassventilbaugruppe 40 von deren Öffnung 14 ab. Über den Einlasskanal 8 durch die freigegebene Öffnung 14 und Ausschnitte im Federbauteil (Fig. 5) hindurch strömt zu förderndes Medium in die Pumpkammer 7. Am Ende der Ansaugphase hat, in diesem Ausführungsbeispiel, die Membran 5 ihre ebene, in Fig. 1 dargestellte Form. Beim erneuten Einbeulen der Membran 5 durch die Piezoscheibe 6 und Erzeugen von Überdruck in der Pumpkammer 7 schließt das Federbauteil 13 der Einlassventilbaugruppe 40. Hingegen hebt das Federbauteil 13 der Auslassventilbaugruppe 41 von deren Öffnung 14 ab. Im abgehobenen Zustand bleibt das Federbauteil 13 der Auslassventilbaugruppe 41 gegenüber dem Böden der Ausnehmung 11 zurückversetzt. Ein zu förderndes Medium kann nun durch die Öffnung 14 der Auslassventilbaugruppe 41, einen zwischen dem Federbauteil 13 und dem Boden der Ausnehmung 11 gebildeten Zwischenraum 42 und den Auslasskanal 9 hindurch abfließen. Der Aktor bewegt sich periodisch mit Frequenzen, die typischerweise zwischen 10° und einigen 10² Hz liegen.

In den folgenden Figuren werden gleiche oder gleichwirkende Teile mit der gleichen Bezugszahl wie in den vorangehenden Figuren bezeichnet, wobei den betreffenden Bezugszahlen von Figur zu Figur fortlaufend der Buchstabe a, b usw. beigefügt ist.

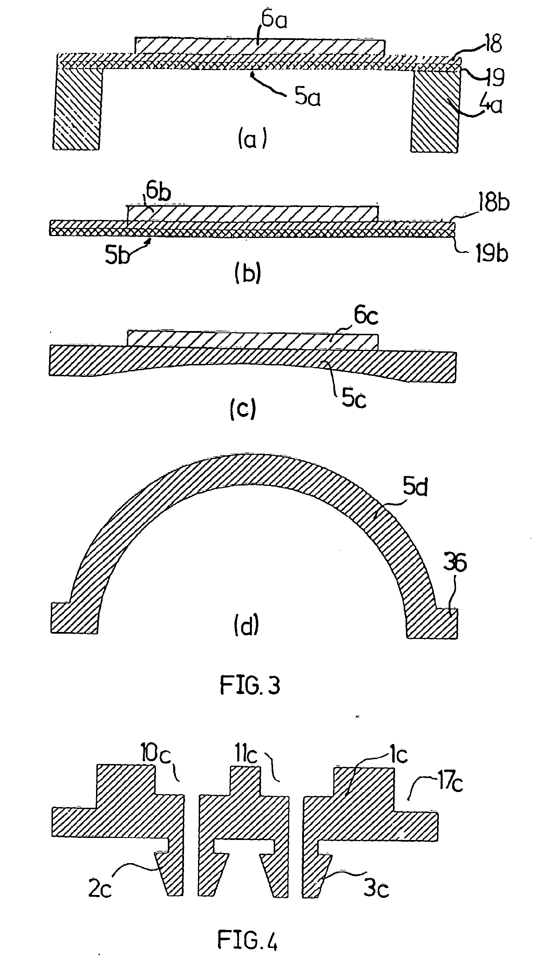

Fig. 3a zeigt eine Aktorbaugruppe mit einem Trägerring 4a, einer Membran 5a und einer Piezoscheibe 6a, wobei die Membran 5a aus zwei Lagen 18 und 19 zusammengesetzt ist. Die Lage 18 besteht aus einem Metall, z.B. Stahl oder Messing. Die an die Pumpkammer und damit das Medium angrenzende Lage 19 besteht aus einem Kunststoff. Durch die Metalllage wird ein gewünschtes Verformungsverhalten der Membran erreicht. Die Kunststofflage sichert die Metalllage gegen aggressives Fördergut und ist gegen das Fördermedium beständig. Teilkristalline Kunststoffe, wie Polypropylen, amorphe Kunststoffe, wie Polycarbonat, oder Hochleistungskunststoffe, wie Polyphenylensulfid, Polyetheretherketon oder fluorhaltige Kunststoffe sind hierfür einsetzbar.

Eine in Fig. 3b gezeigte Aktorbaugruppe weist eine aus zwei solchen Lagen 18b und 19b bestehende Membran 5b und eine Piezoscheibe 6b auf. Die Baugruppe wird ohne Trägerring direkt auf ein Basisteil aufgesetzt, das sich von dem Basisteil von Fig. 1 dadurch unterscheidet, dass keine Ringschulter 17 vorgesehen ist. Stattdessen könnte eine Randerhöhung einen Zentriersitz bilden. Somit entsteht eine selbstansaugende, zur Förderung kleiner Volumenströme geeignete Pumpe mit einem zwischen 0 und einem Maximalwert schwankenden Volumen der Pumpkammer, wobei die Membran 5b durch die Piezoscheibe 6b nur ausgebeult wird.

Eine weitere Aktorbaugruppe für eine solche Pumpe mit einem zwischen 0 und einem Maximalwert schwankenden Pumpkammetvolumen zeigt Fig. 3c. Eine mit einer Piezoscheibe 6c verbundene Membran 5c weist an ihrer der Pumpkammer zugewandten Seite eine dem maximalen Pumpkammervolumen entsprechende Ausnehmung auf, welche beim Einbeulen der Membran 5c durch die Piezoscheibe 6c verschwindet.

Fig. 3d zeigt eine Aktorbaugruppe mit einer kappenartig geformten Membran 5d aus Kunststoff, die über einen Flansch 36 mit einer Basisbaugruppe verbindbar ist. Die rückstellfähige Membran 5d lässt sich z.B. direkt von Hand mit dem Daumen oder durch einen geeigneten Stößel eines vorübergehend oder dauerhaft mit der Pumpe verbundenen Antriebes einbeulen. Gegenüber einer Aktorbaugruppe mit einer Piezoscheibe lassen sich längere Membranhübe und entsprechend größere Änderungen des Pumpkammervolumens erreichen. Eine Mikropumpe mit einer solchen Membran könnte z.B. im Rahmen des Umweltschutzes zur Gewinnung von Proben eingesetzt werden.

Fig. 4 zeigt eine alternative Ausführungsform einer Basisbaugruppe mit einem Basisteil 1c, das einstückig mit einem Einlassanschluss 2c und einem Auslassanschluss 3c ausgebildet ist.

Die Fig. 5 und 6 zeigen detaillierter den Aufbau der in der Mikromembranpumpe von Fig. 1 und 2 verwendeten Ventilbaugruppen 40 und 41.

Das Sitzbauteil 12 der Ventilbaugruppe weist eine Bodenplatte 20 und eine ringförmige Randerhöhung 21 auf, durch die eine gefäßartige Vertiefung für das Federbauteil 13 gebildet ist. Die Höhe der Randerhöhung ist gleich der Tiefe der Ausnehmungen 10 und 11. Die Oberseite des Federbauteils ist gegen die Randerhöhung 21 rückversetzt. Das Federbauteil 13 ist über einen ringförmigen Randbereich 22 mit dem Sitzbauteil 12 verklebt oder verschweißt. Wie aus Fig. 6 hervorgeht, weist das Federbauteil 13 ein den ringförmigen Randbereich 22 diametral überspannendes Lippenelement 23 mit einer Aufweitung 24 im Bereich eines Ventilsitzes 29 auf. Das Federbauteil 13 lässt sich aus einer Kunststofffolie herstellen, wobei die Foliendicke zwischen 0,01 und 0,3 mm liegen kann.

Unter dem Einfluss des Drucks in der Pumpkammer 7 hebt sich das Lippenelement 23, insbesondere dessen Aufweitung 24, unter Freigabe der Öffnung 14 von dem Sitzbereich ab bzw. liegt unter Verschluss der Öffnung gegen den Sitzbereich an. Bei geöffnetem Ventil kann aus der Öffnung 14 austretendes Medium durch Ausschnitte 25 und 26 gebildete Öffnungen im Federbauteil 13 durchströmen und in die Pumpkammer 7 bzw. den Auslasskanal 9 gelangen.

Bei dem Ausführungsbeispiel für eine Ventilbaugruppe von Fig. 7a ist im Bereich des Ventilsitzes eine sich von einer Bodenplatte 20a erstreckende Ringerhöhung 27 gebildet, die für eine geeignete Vorspannung eines federnden Lippenelements 23a sorgt und somit ein sicheres Verschließen des Ventils ermöglicht.

Bei dem Ausführungsbeispiel von Fig. 7b ist neben einer Ringerhöhung 27b am Ventilsitz ein erhöhter Randsitz 28 gebildet, durch den ein Lippenelement 23b über seine gesamte Länge von einer Bodenplatte 20b abgehoben ist. Letztere Ausführungsform hat den Vorteil, dass sich im Fördergut mitgeführte Partikel nicht zwischen der Unterseite des Lippenelements und der Bodenplatte festsetzen können.

Im folgenden werden weitere Ausführungsbeispiele für kreisrunde Federbauteile beschrieben, die wahlweise in das Sitzbauteil 12 einsetzbar sind.

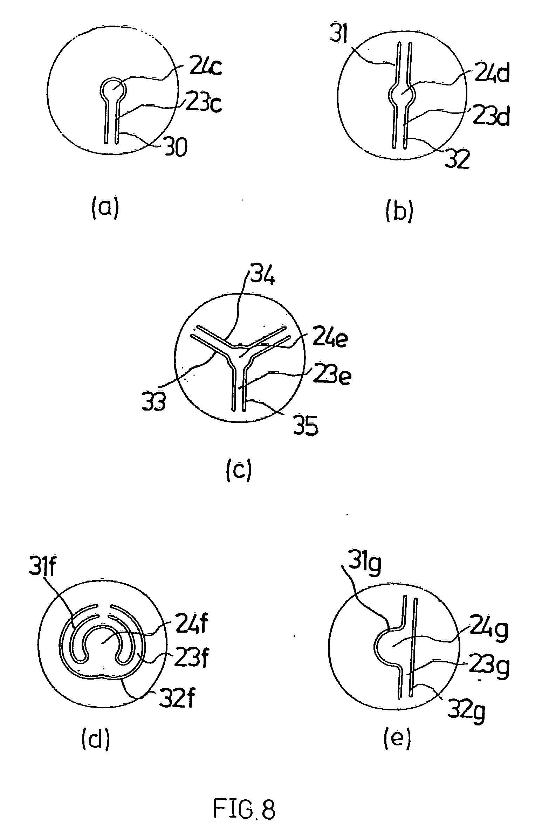

Bei dem Ausführungsbeispiel von Fig. 8a ist ein Lippenelement 23c mit einer Aufweitung 24c im Sitzbereich nur an einem Ende mit dem übrigen Federbauteil verbunden, und es ist ein Schlitzausschnitt 30 gebildet. Durch eine solche Bauweise lassen sich geringe Federkonstanten des Lippenelements erreichen.

Bei dem Ausführungsbeispiel von Fig. 8b ist durch Schlitzausschnitte 31 und 32 ein an beiden Enden mit dem übrigen Federbauteil verbundenes Lippenelement 23d mit einer Aufweitung 24d im Bereich des Ventilsitzes gebildet. Die Federkonstante dieses beiderseitig mit dem übrigen Federbauteil verbundenen Lippenelements kann höher als bei dem vorangehenden Ausführungsbeispiel sein. Die Aufweitung 24d neigt weniger zu Verkippungen und sitzt daher gleichmäßiger als bei dem vorangehenden Ausführungsbeispiel auf dem Ventilsitz auf.

Eine noch größere Federkonstante und Gleichmäßigkeit des Aufsitzens wird bei dem Ausführungsbeispiel von Fig. 8c erzielt, bei dem durch drei Schlitzausschnitte 33, 34 und 35 ein dreiarmiges Lippenelement 23e mit einer Aufweitung 24e gebildet ist. Die Verbindungsstellen des Lippenelements mit der übrigen Folie sind gleichmäßig über den Umfang eines zur Verbindung mit dem Sitzbauteil vorgesehenen Ringbereichs verteilt.

Bei dem Ausführungsbeispiel von Fig. 8d sind zwei ineinander verschachtelte Schlitzausschnitte 31f und 32f vorgesehen, durch die ein annähernd ringförmiges Lippenelement mit einer nach innen vorstehenden Aufweitung 24f gebildet ist. Bei dieser Ausführungsform lässt sich eine verhältnismäßig geringe Federkonstante des Lippenelements 23f mit einer gleichmäßigen Anlage der Aufweitung 24f im Ventilsitzbereich verbinden.

Fig. 8e zeigt ein Federbauteil mit einem durch zwei Schlitzausschnitte 31 g und 32g gebildeten geraden Lippenelement 23g mit einer seitlich zur Mitte des Federbauteils vorstehenden Aufweitung 24g.

Allen in Fig. 8 gezeigten Federbauteilen sind schmale, den Konturen des Lippenelements folgende Öffnungen gemeinsam, die vorteilhaft kein großes Totvolumen bilden. Je nach Bauweise betragen die Federkonstanten des Lippenelements zwischen 0,8 mN und 0,0005 mN pro Mikrometer Auslenkung.

## Patentansprüche

1. Mikropumpe mit einer Pumpmembran (5), die unter Änderung des Volumens einer an die Pumpmembran (5) und ein Basisteil (1) grenzenden Pumpkammer (7) bewegbar ist, und mit zwei in Ausnehmungen (10,11) im Basisteil angeordneten, auf den Druck in der Pumpkammer ansprechenden Ventilen zum wechselseitigen Öffnen und Sperren eines Einlass- (8) und Auslasskanals (9) für das zu fördernde Medium, wobei die Ventile ohne gemeinsame Bauteile durch als solche funktionsfähige, einen Ventilsitz (29) und Ventilkörper (13) aufweisende Ventilbaugruppen (40,41) gebildet sind und wobei die Ventilbaugruppen (40,41) ein den Ventilsitz bildendes Sitzbauteil (12) mit einer durch eine Randerhöhung (21) einer Bodenplatte (20) gebildeten Vertiefung für die Aufnahme eines den Ventilkörper bildenden Federbauteils (13) aufweisen,
**dadurch gekennzeichnet,**
**dass** die Ventilbaugruppen (40,41) lediglich durch das Sitz- (12) und Federbauteil (13) gebildet sind, und
**dass** das Federbauteil (13) durch die Randerhöhung (21) zentriert und in einem ringförmigen Randbereich (22) mit der Bodenplatte (20) des Sitzbauteils (12) verschweißt ist.

2. Mikropumpe nach Anspruch 1,
**dadurch gekennzeichnet,**
**dass** die beiden Ventilbaugruppen (40,41) baugleich sind.

3. Mikropumpe nach Anspruch 1 oder 2,
**dadurch gekennzeichnet,**
**dass** als Ausnehmungen zur Pumpkammer (7) offene Einsenkungen (10,11) ausgebildet sind.

4. Mikropumpe nach Anspruch 3,
**dadurch gekennzeichnet,**
**dass** die Höhe der Ventilbaugruppe (40,41) gleich der Tiefe der sie aufnehmenden Einsenkung (10,11) ist.

5. Mikropumpe nach einem der Ansprüche 1 bis 4,
**dadurch gekennzeichnet,**
**dass** das Sitzbauteil (12) rotationssymmetrisch ist und das Federbauteil (13) zum Schließen bzw. Freigeben einer zentralen Öffnung (14) im Sitzbauteil (12) ausgebildet ist.

6. Mikropumpe nach einem der Ansprüche 1 bis 5,
**dadurch gekennzeichnet,**
**dass** das Federbauteil (13) eine Folie aufweist, in der durch wenigstens einen Ausschnitt (25,26;30-35) ein an einem Ende oder an mehreren Enden mit der übrigen Folie verbundenes Lippenelement (23) gebildet ist.

7. Mikropumpe nach Anspruch 6,
**dadurch gekennzeichnet,**
**dass** der Ausschnitt ein der Kontur des Lippenelements (23) folgender Schlitzausschnitt (30-35) ist.

8. Mikropumpe nach Anspruch 6 oder 7,
**dadurch gekennzeichnet,**
**dass** das Federbauteil (13) in einem äußeren, durch das Sitzbauteil (12) zentrierten Ringbereich (22) mit dem Sitzbauteil (12) verbunden ist, von dem sich nach innen das Lippenelement (23) erstreckt.

9. Mikropumpe nach einem der Ansprüche 1 bis 8,
**dadurch gekennzeichnet,**
**dass** das Sitzbauteil im Bereich des Ventilsitzes eine sich von der Bodenplatte (20) erstreckende Ringerhöhung (27) aufweist, die das Lippenelement im Ruhezustand unter Vorspannung setzt.

10. Mikropumpe nach Anspruch 9,
**dadurch gekennzeichnet,**
**dass** das Sitzbauteil einen erhöhten Randsitz (28) aufweist, durch den das Lippenelement (23b) über seine gesamte Länge von einer Bodenplatte (20b) abgehoben ist.

11. Mikropumpe nach einem der Ansprüche 8 bis 10,
**dadurch gekennzeichnet,**
**dass** das Lippenelement (23) mit dem Ringbereich (22) an zwei Diametralen oder drei, gleichmäßig über den Ringbereich (22) verteilten Stellen mit dem Ringbereich (22) verbunden ist.

12. Mikropumpe nach einem der Ansprüche 1 bis 11,
**dadurch gekennzeichnet,**
**dass** sie aus einer, die Ventilbaugruppen aufnehmenden Basisbaugruppe, die aus dem Basisteil (1) und Schlauchanschlüssen (2,3) besteht, und einer Aktorbaugruppe, welche die Membran (5) und eine mit der Membran verbundene Piezoscheibe (6) umfasst, zusammengesetzt ist.

13. Mikropumpe nach Anspruch 11,
**dadurch gekennzeichnet,**
**dass** die Basisbaugruppe (1-3), von den Ausnehmungen (10,11) abgesehen, und/oder die Aktorbaugruppe (4,5,6) rotationssymmetrisch ausgebildet sind/ist.

14. Mikropumpe nach einem der Ansprüche 1 bis 13,
**dadurch gekennzeichnet,**
**dass** das Basisteil (1) scheibenförmig ausgebildet ist und der Ein- und Auslasskanal (8,9) sich senkrecht zur Scheibenebene erstrecken.

15. Mikropumpe nach Anspruch 13 oder 14,
**dadurch gekennzeichnet,**
**dass** für die Aktorbaugruppe auf dem Basisteil (1) ein Sitz gebildet ist und vorzugsweise die Pumpmembran (5) über einen Trägerring (4) auf einer Ringschulter (17) am Basisteil (1) aufsitzt.

16. Mikropumpe nach einem der Ansprüche 13 bis 15,
**dadurch gekennzeichnet,**
**dass** die Basisbaugruppe (1c) einstückig mit den Schlauchanschlüssen (2c,3c) ausgebildet ist.

17. Mikropumpe nach einem der Ansprüche 1 bis 15,
**dadurch gekennzeichnet,**
**dass** wenigstens die mit dem Medium in Berührung kommenden Teil der Pumpe aus einem Kunststoff bestehen.

18. Mikropumpe nach einem der Ansprüche 1 bis 17,
**dadurch gekennzeichnet,**
**dass** die Membran (5) einstückig aufgebaut ist oder mehrere Lagen (18,19) aus unterschiedlichem Material aufweist.

19. Mikropumpe nach einem der Ansprüche 1 bis 18,
**dadurch gekennzeichnet,**
**dass** die Membran (5c) eine der Pumpkammer zugewandte, vorzugsweise dem maximalen Pumpkammervolumen entsprechende Ausnehmung aufweist.

20. Mikropumpe nach einem der Ansprüche 1 bis 18,
**dadurch gekennzeichnet,**
**dass** die Membran (5d) kappenartig ausgebildet ist und manuell oder mit Hilfe eines vorübergehend oder dauerhaft mit der Membran verbundenen Antriebs bewegbar ist.

## Claims

1. Micropump with a pump diaphragm (5) which is movable, at the same time with a change in the volume of a pumping chamber (7) contiguous to the pump diaphragm (5) and to a base part (1), and with two valves arranged in recesses (10, 11) in the base part and responding to the pressure in the pumping chamber, for alternately opening and shutting of an inlet duct (8) and outlet duct (9) for the medium to be conveyed, the valves being formed, without common components, by valve subassemblies (40, 41) capable of functioning as such and having a valve seat (29) and valve body (13), and the valve subassemblies (40, 41) having a seat component (12) forming the valve seat, with the depression formed by a marginal elevation (21) of a bottom plate (20) and intended for receiving a spring component (13) forming the valve body, **characterized in that** the valve subassemblies (40, 41) are formed solely by the seat component (12) and spring component (13), and **in that** the spring component (13) is centred by the marginal elevation (21) and is welded to the bottom plate (20) of the seat component (12) in an annular margin region (22).

2. Micropump according to Claim 1, **characterized in that that** the two valve subassemblies (40, 41) are structurally identical.

3. Micropump according to Claim 1 or 2, **characterized in that** countersinks (10, 11) open to the pumping chamber (7) are formed as recesses.

4. Micropump according to Claim 3, **characterized in that** the height of the valve subassembly (40, 41) is equal to the depth of the countersink (10, 11) receiving it.

5. Micropump according to one of Claims 1 to 4, **characterized in that** the seat component (12) is rotationally symmetrical, and the spring component (13) is designed for closing and releasing a central orifice (14) in a seat component (12).

6. Micropump according to one of Claims 1 to 5, **characterized in that** the spring component (13) has a film in which a lip element (23) connected at one end or at a plurality of ends to the remaining film is formed by means of at least one cutout (25, 26; 30-35).

7. Micropump according to Claim 6, **characterized in that** the cutout is a slot cutout (30-35) following the contour of the lip element (23).

8. Micropump according to Claim 6 or 7, **characterized in that** the spring component (13) is connected to the seat component (12) in an outer annular region (22) which is centred by the seat component (12) and from which the lip element (23) extends inwards.

9. Micropump according to one of Claims 1 to 8, **characterized in that** the seat component has in the region of the valve seat an annular elevation (27) which extends from the bottom plate (20) and which puts the lip element under prestress in the state of rest.

10. Micropump according to Claim 9, **characterized in that** the seat component has an elevated marginal seat (28) by means of which the lip element (23b) is lifted off over its entire length from a bottom plate (20b).

11. Micropump according to one of Claims 8 to 10, **characterized in that** the lip element (23) is connected to the annular region (22) at two diametrals or is connected to the annular region (22) at three points distributed uniformly over the annular region (22).

12. Micropump according to one of Claims 1 to 11, **characterized in that** it is composed of a base subassembly, which receives the valve subassemblies and which consists of the base part (1) and hose connections (2, 3), and of an actuator subassembly, which comprises the diaphragm (5) and a piezoelectric disc (6) connected to the diaphragm.

13. Micropump according to Claim 11, **characterized in that** the base subassembly (1-3), with the exception of the recesses (10, 11), and/or the actuator subassembly (4, 5, 6) are/is of rotationally symmetrical design.

14. Micropump according to one of Claims 1 to 13, **characterized in that** the base part (1) is of disc-shaped design, and the inlet and the outlet duct (8, 9) extend perpendicularly with respect to the disc plane.

15. Micropump according to Claim 13 or 14, **characterized in that** a seat for the actuator subassembly is formed on the base part (1), and preferably the pump diaphragm (5) sits via a carrier ring (4) on an annular shoulder (17) located on the base part (1).

16. Micropump according to one of Claims 13 to 15, **characterized in that** the base subassembly (1c) is formed in one piece with the hose connections (2c, 3c).

17. Micropump according to one of Claims 1 to 15, **characterized in that** at least the parts of the pump which come into contact with the medium consist of a plastic.

18. Micropump according to one of Claims 1 to 17, **characterized in that** the diaphragm (5) is constructed in one piece or has a plurality of layers (18, 19) consisting of different material.

19. Micropump according to one of Claims 1 to 18, **characterized in that** the diaphragm (5c) has a recess facing the pumping chamber and preferably corresponding to the maximum pumping-chamber volume.

20. Micropump according to one of Claims 1 to 18, **characterized in that** the diaphragm (5d) is of cap-like design and can be moved manually or with the aid of a drive connected temporarily or permanently to the diaphragm.

## Revendications

1. Micropompe avec une membrane (5) de pompe, qui est mobile avec modification du volume d'une chambre (7) de pompe adjacente à la membrane (5) de pompe et à une pièce de base (1), et avec deux soupapes disposées dans des évidements (10, 11) dans la pièce de base, réagissant à la pression dans la chambre de la pompe pour l'ouverture et la fermeture alternative d'un canal d'entrée (8) et de sortie (9) pour l'agent à transporter, les soupapes étant formées sans pièces communes par des groupes d'éléments (40, 41) de soupape aptes au fonctionnement en tant que tels, présentant un siège (29) de soupape et un corps (13) de soupape et les groupes d'éléments (40, 41) de soupape présentant une pièce de siège (12) formant le siège de la soupape avec un creux formé par un relèvement (21) de bord d'une plaque de fond (20), ledit corps creux étant destiné à recevoir un élément à ressort (13) formant le corps de la soupape, **caractérisée en ce que** les groupes éléments (40, 41) de soupape ne sont formés que par la pièce de siège (12) et la pièce à ressort (13) et **en ce que** la pièce à ressort (13) est centrée par le relèvement (21) de bord et soudée dans une zone de bord annulaire (22) avec la plaque de fond (20) de l'élément de siège (12).

2. Micropompe selon la revendication 1, **caractérisée en ce que** les deux groupes d'éléments (40, 41) de soupape présentent la même structure.

3. Micropompe selon la revendication 1 ou 2, **caractérisée en ce que** des renfoncements (10, 11) ouverts vers la chambre de pompe (7) sont formés comme évidements.

4. Micropompe selon la revendication 3, **caractérisée en ce que** la hauteur du groupe d'éléments (40, 41) de soupape est égale à la profondeur du renfoncement (10,11) qui le reçoit.

5. Micropompe selon l'une quelconque des revendications 1 à 4, **caractérisée en ce que** la pièce de siège (12) présente une symétrie de rotation et **en ce que** la pièce à ressort (13) est réalisée dans la pièce de siège (12) pour la fermeture ou la libération d'une ouverture centrale (14).

6. Micropompe selon l'une quelconque des revendications 1 à 5, **caractérisée en ce que** la pièce à ressort (13) présente une feuille dans laquelle est formé, par au moins une découpe (25, 26 ; 30-35), un élément à lèvres (23) relié en une extrémité ou en plusieurs extrémités avec le reste de la feuille.

7. Micropompe selon la revendication 6, **caractérisée en ce que** la découpe est une découpe en forme de fente (30-35) suivant le contour de l'élément à lèvres (23).

8. Micropompe selon la revendication 6 ou 7, **caractérisée en ce que** la pièce à ressort (13) est reliée avec la pièce à siège (12) dans une zone annulaire (22) externe, centrée par la pièce à siège (12), à partir de laquelle s'étend vers l'intérieur l'élément à lèvres (23).

9. Micropompe selon l'une quelconque des revendications 1 à 8, **caractérisée en ce que** la pièce à siège présente, au niveau du siège de la soupape, une élévation annulaire (27) s'étendant à partir de la plaque de fond (20), qui précontraint l'élément à lèvres dans l'état au repos.

10. Micropompe selon la revendication 9, **caractérisée en ce que** la pièce à siège présente un siège de bord (28) élevé, par lequel l'élément à lèvres (23b) est soulevé sur toute sa longueur par rapport à une plaque de fond (20b).

11. Micropompe selon l'une quelconque des revendications 8 à 10, **caractérisée en ce que** l'élément à lèvres (23) est relié avec la zone annulaire (22) en deux positions diamétralement opposées ou en trois positions réparties régulièrement sur la zone annulaire (22).

12. Micropompe selon l'une quelconque des revendications 1 à 11, **caractérisée en ce qu'**elle est formée par un groupe d'éléments de base destiné à recevoir le groupe d'éléments de la soupape, ledit groupe d'élément de base étant constitué par la pièce de base (1) et des raccords (2, 3) pour flexibles, et par un groupe d'éléments d'acteur, qui comprend la membrane (5) et un disque piézoélectrique (6) relié avec la membrane.

13. Micropompe selon la revendication 11, **caractérisée en ce que** le groupe d'éléments de base (1-3), à l'exception des évidements (10, 11) et/ou le groupe d'éléments d'acteur (4,5,6) sont réalisés en présentant une symétrie de rotation.

14. Micropompe selon l'une quelconque des revendications 1 à 13, **caractérisée en ce que** la pièce de base (1) est réalisée en forme de disque et que le canal d'entrée et de sortie (8, 9) s'étendent perpendiculairement par rapport au plan du disque.

15. Micropompe selon la revendication 13 ou 14, **caractérisée en ce qu'**un siège est formé pour le groupe d'éléments d'acteur sur la pièce de base (1) et que de préférence la membrane à pompe (5) est placée via un anneau support (4) sur un épaulement annulaire (17) sur la pièce de base (1).

16. Micropompe selon l'une quelconque des revendications 13 à 15, **caractérisée en ce que** le groupe d'éléments de base (1c) est réalisé en une pièce avec les raccords (2c, 3c) pour les flexibles.

17. Micropompe selon l'une quelconque des revendications 1 à 15, **caractérisée en ce qu'**au moins les parties entrant en contact avec l'agent sont constituées par un matériau synthétique.

18. Micropompe selon l'une quelconque des revendications 1 à 17, **caractérisée en ce que** la membrane (5) est réalisée en une pièce ou présente plusieurs couches (18, 19) constituées par des matériaux différents.

19. Micropompe selon l'une quelconque des revendications 1 à 18, **caractérisée en ce que** la membrane (5c) présente un évidement orienté vers la chambre de la pompe, correspondant de préférence au volume maximal de la chambre de pompe.

20. Micropompe selon l'une quelconque des revendications 1 à 18, **caractérisée en ce que** la membrane (5d) est réalisée de manière analogue à un capuchon et peut être déplacée manuellement ou à l'aide d'un dispositif d'entraînement relié temporairement ou définitivement avec la membrane.
